# EUROPÄISCHE PATENTSCHRIFT

(11) **EP 0 798 068 B1**
(45) Veröffentlichungstag und Bekanntmachung des Hinweises auf die Patenterteilung: **28.11.2001**
(21) Anmeldenummer: 97104098.5
(22) Anmeldetag: 12.03.1997
(51) Int. Cl.: B23K 26/12

(54) **Vorrichtung zum Bearbeiten von flachen Werkstücken, wie z.B. Karten oder Buchdokumente**
Device for machining flat workpieces, as for example cards or other book-documents
Dispositif d'usinage d'objets plats, comme par exemple des cartes ou autres documents de type livre

(30) Priorität: 25.03.1996 DE 19611713
(43) Veröffentlichungstag der Anmeldung: 01.10.1997
(73) Patentinhaber: Giesecke & Devrient GmbH, 81677 München (DE)
(72) Erfinder: Bernecker, Otto, Dr., 85375 Neufahrn (DE); Lass, Joseph, Dr., 80798 München (DE); Winner, Friedrich, 81373 München (DE); Pollak, Armin, D-72366 Penzberg (DE)
(74) Vertreter: Klunker . Schmitt-Nilson . Hirsch

(56) Entgegenhaltungen:
- EP-A- 0 430 861
- DE-B- 2 907 004
- US-A- 4 205 216

## Beschreibung

Die Erfindung betrifft eine Vorrichtung zum Bearbeiten von flachen Werkstücken, wie z. B. Karten oder Buchdokumente, gemäß dem Oberbegriff des Anspruchs 1.

Eine solche Vorrichtung ist beispielsweise aus der DE-PS 29 07 004 bekannt. Die laminierten Werkstücke werden in die Vorrichtung eingegeben und dort mit verschiedenen Daten des zukünftigen Benutzer des jeweiligen Werkstücks personalisiert. In einem Schritt dieser Personalisierung werden beispielsweise Daten in einen Magnetstreifen des Werkstücks eingeschrieben. In einem anderen Schritt werden bestimmte Daten mittels eines Laserstrahls in dafür vorgesehene Datenbereiche des Werkstücks eingebrannt.

Weiterhin ist es bekannt, daß bei der Verwendung von Lasern Sicherheitsregeln beachtet werden müssen, um mögliche Verletzungen des Bedieners auszuschließen. Zudem entstehen unter Umständen beim Einbrennen der Daten in das Werkstück mittels Laserlicht Gase bzw. Stäube, die für den Bediener gesundheitsschädlich sein können.

Um mögliche Gefährdungen des Bedieners auszuschließen, wird das Werkstück zum Einbrennen der Daten in eine Bearbeitungskammer transportiert. Die Bearbeitungskammer bildet während der Bearbeitung des Werkstücks einen geschlossenen Raum, der einerseits einen direkten oder indirekten Austritt des Laserlichts und andererseits einen Austritt entstehender Gase bzw. Stäube aus der Bearbeitungskammer verhindern soll. Bei Bedarf können die entstehenden Gase bzw. Stäube auch zusätzlich aus der Bearbeitungskammer abgesaugt werden.

Die Werkstücke werden zur Bearbeitung von einer Übergabeeinrichtung direkt in einen Werkstückhalter übergeben, der sich in der Bearbeitungskammer befindet. Die Übergabevorrichtung weist Reibräder auf, die die Werkstücke durch einen Spalt in der Bearbeitungskammer in den Werkstückhalter innerhalb der Bearbeitungskammer transportieren. Der Spalt entspricht im wesentlichen den Abmessungen der Karte.

Ein Nachteil der bekannten Vorrichtung ist es, daß bei der Übergabe des Werkstücks in die Bearbeitungskammer ein Risiko der Undichtigkeit besteht, so daß eventuell Laserlicht oder Gase bzw. Stäube aus der Bearbeitungskammer austreten können. Weiterhin besteht die Möglichkeit, daß das durch den relativ eng begrenzten Spalt hindurch übergebene Werkstück außer Kontrolle gerät und beispielsweise auf den Boden der Bearbeitungskammer fällt.

Aus der US-A-4,205,216 ist ein Laserschweißsystem gemäß dem Oberbegriff des Anspruchs 1 bekannt, bei dem auf einem Drehteller acht starr montierte Werkstückhalter in Form einer schrägen Rampe mit einem zentralen Permanentmagneten vorgesehen sind. Magnetische Werkstücke, wie Stahlbleche, können damit in einer vorgegebenen Ausrichtung fixiert werden und von einer Seite bearbeitet werden.

Der Erfindung liegt die Aufgabe zugrunde, eine Vorrichtung zum Bearbeiten von flachen Werkstücken, wie z. B. Karten oder Buchdokumente, vorzuschlagen, die eine mögliche Gefährdung des Bedieners durch austretendes Laserlicht oder Gase bzw. Stäube aus der Bearbeitungskammer vermeidet, einen sicheren Transport des Werkstücks in die Bearbeitungskammer gewährleistet und gleichzeitig eine Bearbeitung beider Seiten des Werkstücks ermöglicht.

Erfindungsgemäß wird die Aufgabe durch die im Anspruch 1 angegebenen Merkmale gelöst. Vorteilhafte Weiterbildungen sind Gegenstand der Unteransprüche.

Der Grundgedanke der Erfindung besteht darin, eine Einbringeinrichtung als Teil der Wandung der Bearbeitungskammer vorzusehen, so daß zumindest während der Bearbeitung des Werkstücks in der Bearbeitungskammer ein geschlossener Raum gebildet wird und zusätzlich wird auf der Einbringeinrichtung mindestens ein Werkstückhalter angeordnet, der mittels eines Antriebs um eine Drehachse in der Werkstückebene drehbar ist und der von der Einbringeinrichtung in die Bearbeitungskammer hinein- bzw. herausbewegt wird.

Zur Eingabe des Werkstücks in die Bearbeitungskammer wird zunächst die Einbringeinrichtung mit dem Werkstückhalter in eine Position bewegt, in der sich der Werkstückhalter außerhalb der Bearbeitungskammer befindet. Danach wird das Werkstück entweder von Hand oder durch eine entsprechende Übergabeeinrichtung in den Werkstückhalter übergeben. Die Einbringeinrichtung bewegt dann den Werkstückhalter mit dem Werkstück in die Bearbeitungskammer.

Ein Vorteil der Erfindung besteht darin, daß die Bearbeitungskammer mit der Einbringeinrichtung während der Bearbeitung des Werkstücks einen geschlossenen Raum bildet und somit eine Gefährdung des Bedieners durch Laserlicht oder Gase bzw. Stäube ausgeschlossen werden kann. Da die Übergabe des Werkstücks in den Werkstückhalter außerhalb der Bearbeitungskammer und nicht durch einen relativ eng begrenzten Spalt erfolgt, ist die Übergabe wesentlich einfacher und sicherer.

In einer bevorzugten Ausführungsform wird die Einbringeinrichtung drehbar ausgeführt und weist Wandelemente auf, die so angeordnet sind, daß sie mit der Bearbeitungskammer zumindest nach einer Drehung einen geschlossenen Raum bildet. Zusätzlich wird wenigstens ein weiterer Werkstückhalter auf der Einbringeinrichtung vorgesehen. Die Werkstückhalter werden so auf der Einbringeinrichtung angeordnet, daß sich mindestens ein Werkstückhalter innerhalb der Bearbeitungskammer und mindestens ein Werkstückhalter außerhalb der Bearbeitungskammer befindet.

Durch eine geeignete Anordnung der Wandelemente der bevorzugten Ausführungsform kann erreicht werden, daß die Bearbeitungskammer mit der Einbringeinrichtung auch während der Einbringung des Werkstückhalters mit dem Werkstück in die Bearbeitungskammer stets einen geschlossenen Raum bildet.

Vorteil der bevorzugten Ausführungsform ist es, daß die Übergabe eines Werkstücks in den Werkstückhalter hinein bzw. aus dem Werkstückhalter heraus außerhalb der Bearbeitungskammer schon vorgenommen werden kann, während ein Werkstück, das sich im Werkstückhalter innerhalb der Bearbeitungskammer befindet, vom Bearbeitungswerkzeug bearbeitet wird.

Ein weiterer Vorteil der bevorzugten Ausführungsform ist es, daß sie eine sehr leichte und kompakte Konstruktion ermöglicht, die eine erschütterungsfreie Halterung des Werkstücks sicherstellt.

Weitere Ausführungsformen und Vorteile der Erfindung werden nachfolgend anhand der Figuren beschrieben. Es zeigen:
- Fig.1: Prinzipskizze einer Aufsicht auf die bevorzugte Ausführungsform,
- Fig. 2: Prinzipskizze einer Seitenansicht der bevorzugten Ausführungsform,
- Fig. 3: Prinzipskizze zum Funktionsablauf der bevorzugten Ausführungsform,
- Fig. 4: Prinzipskizze einer Seitenansicht einer zweiten Ausführungsform,
- Fig. 5: Prinzipskizze einer Aufsicht auf eine dritte Ausführungsform,
- Fig. 6: Prinzipskizze der bevorzugten Ausführungsform mit mechanisch entkoppeltem Werkstückhalter.

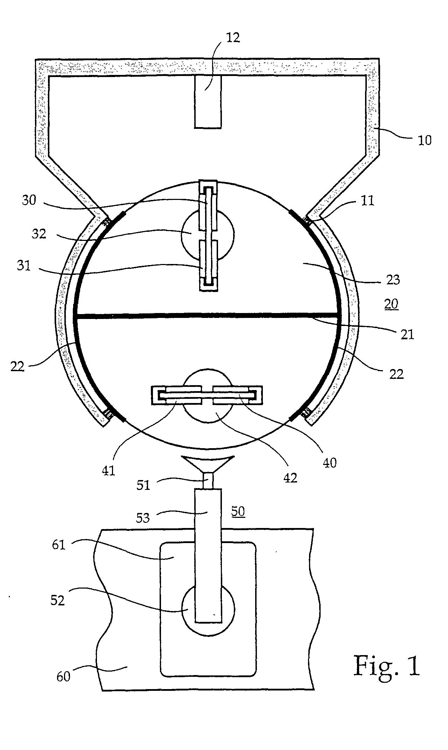

Die Fig. 1 zeigt eine Prinzipskizze einer Aufsicht auf die bevorzugte Ausführungsform. Die Bearbeitungskammer 10 weist Dichtungen 11 auf, mit denen die Bearbeitungskammer 10 gegenüber den Wandelementen der Einbringeinrichtung 20 abgedichtet wird. Das Bearbeitungswerkzeug 12 ist hier lediglich schematisch dargestellt. Bevorzugt handelt es sich hierbei um ein Lasersystem mit einer dazugehörigen Spiegelanordnung zur Ablenkung des Lichtstrahls. Im allgemeinen befinden sich weder der Laser noch die Spiegelelemente innerhalb der Bearbeitungskammer 10. Es genügt beispielsweise, ein entsprechendes Fenster in der Bearbeitungskammer 10 vorzusehen, durch das der Laserstrahl ins Innere der Bearbeitungskammer 10 gelangen kann, um dort die entsprechenden Daten in das Werkstück einzubrennen.

Die Einbringeinrichtung 20 ist als Teil der Wandung der Bearbeitungskammer 10 ausgelegt und weist unter anderem ein mittleres Wandelement 21, zwei seitliche Wandelemente 22 und ein Bodenelement 23 auf. Die Wandelemente sind hier so angeordnet, daß die Einbringeinrichtung 20 über die Dichtungen 11 mit der Bearbeitungskammer 10 einen geschlossenen Raum bilden.

Auf dem Bodenelement 23 der Einbringeinrichtung 20 sind in der bevorzugten Ausführungsform zwei Werkstückhalter 31 und 41 vorgesehen. Der Werkstückhalter 31 befindet sich innerhalb der Bearbeitungskammer 10 und der Werkstückhalter 41 außerhalb. Im Werkstückhalter 31 bzw. 41 befindet sich jeweils ein Werkstück 30 bzw. 40. Die Werkstückhalter 31 und 41 sind drehbar ausgeführt. Die Verbindung der Werkstückhalter 31 und 41 zu ihren Antrieben wird durch Durchführungen 32 bzw. 42 hergestellt.

Eine Übergabeeinrichtung 50 dient zur Übergabe der Werkstücke in den oder aus dem Werkstückhalter 41, der sich außerhalb der Bearbeitungskammer 10 befindet. Bevorzugt weist die Übergabeeinrichtung 50 zwei Sauger 51 und 52 auf, die durch einen Antrieb 53 bewegt werden können.

Mittels einer Transporteinrichtung 60 werden entweder noch zu bearbeitende Werkstücke 61 zur Übergabeeinrichtung 50 transportiert oder bereits bearbeitete Werkstücke von der Übergabeeinrichtung 50 abtransportiert. Die Transporteinrichtung 60 ist hier beispielhaft als Transportband dargestellt. Selbstverständlich können an dieser Stelle auch andere Transporteinrichtungen, wie z. B. Drehteller verwendet werden. Alternativ können die Werkstücke auch von Hand in der Werkstückhalter 41 eingegeben oder aus diesem herausgenommen werden.

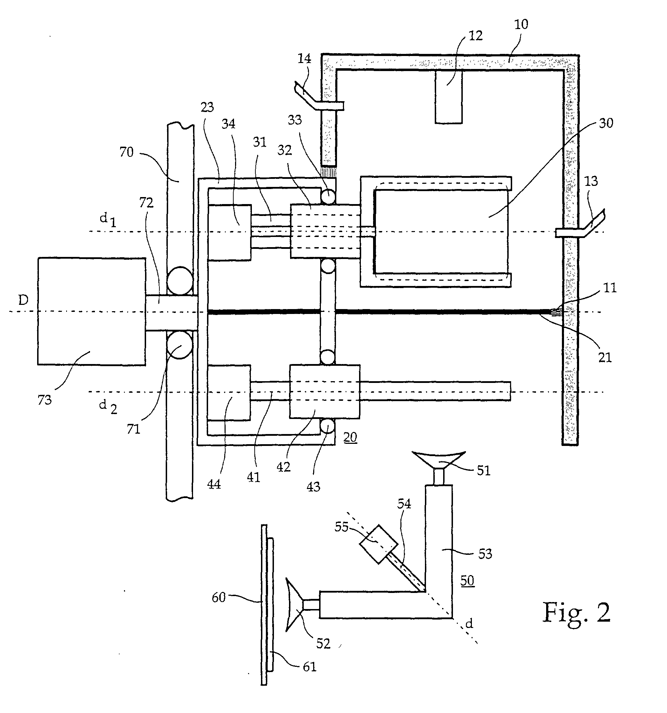

Die Fig. 2 zeigt eine Prinzipskizze einer Seitenansicht der bevorzugten Ausführungsform. Zusätzlich ist hier ein Deckenelement der Bearbeitungskammer 10 gezeigt. Dieses wurde in Fig. 1 aus Gründen der Übersichtlichkeit nicht dargestellt. Gut zu erkennen ist, daß die Bearbeitungskammer 10 über die Dichtungen 11 mit den Wandelementen 21 und 23 der Einbringeinrichtung 20 einen geschlossenen Raum bildet.

Bevorzugt werden die Werkstückhalter 31 bzw. 41 als Greifer ausgeführt. Durch die Verwendung von Greifern als Werkstückhalter 31 bzw. 41 und von Saugern 51, 52 in der Übergabeeinrichtung 50 kann eine schonende Behandlung und präzise Positionierung der Werkstücke 30 bzw. 40 gewährleistet werden. Eine Bildung von Kratzern, wie sie oft bei der Verwendung von Reibrädern auftritt, wird so verhindert. Die Durchführungen 32 bzw. 42 sind auf Lagern 33 bzw. 43 drehbar im Bodenelement 22 der Einbringeinrichtung 20 gelagert. Die Werkstückhalter 31 bzw. 41 können mittels der Antriebe 34 bzw. 44 gedreht, geöffnet oder geschlossen werden. Bevorzugt werden die Antriebe 34 bzw. 44 im Bodenelement 22 der Einbringeinrichtung 20 angeordnet, so daß sie sich außerhalb der Bearbeitungskammer 10 befinden.

Alternativ zu den oben beschriebenen Greifern können die Werkstückhalter beispielsweise auch als Rahmen mit einer entsprechenden Federung ausgelegt sein, in den die Werkstücke eingerastet werden können. Eine weitere Möglichkeit besteht darin, im Werkstückhalter 31 bzw. 41 eine entsprechend tiefe Nut vorzusehen, in die das Werkstück 30 bzw. 40 eingesteckt wird.

Die gesamte Einbringeinrichtung 20 einschließlich der Werkstückhalter 31 und 41 ist auf einer Grundplatte 70 mittels eines Lagers 71 drehbar gelagert. Die Drehung wird von einem Antrieb 73 über eine Achse 72 übertragen. Auch dieser Antrieb 73 befindet sich bevorzugt außerhalb der Bearbeitungskammer 10. Als Antrieb 73 werden bevorzugt Elektromotoren oder pneumatische Mittel verwendet.

Die Drehung der Einbringeinrichtung 20 erfolgt um eine Drehachse D. Die Drehachsen d₁ bzw. d₂ der Werkstückhalter 31 bzw. 41 sind bevorzugt parallel zur Drehachse D der Einbringeinrichtung 20 angeordnet. Wiederum bevorzugt befinden sich die Drehachsen d₁ und d₂ auf einem konzentrischen Kreis um die Drehachse D der Einbringeinrichtung 20. Dies ergibt einen Aufbau mit geringem Trägheitsmoment und geringer Unwucht, was wiederum eine schnelle Drehung und damit geringen Zeitverlust beim Werkstückwechsel gewährleistet.

Bei Bedarf besteht die Möglichkeit, eine gezielte Luftzuführung und Absaugung in der Bearbeitungskammer zu realisieren. Eine in einem Wandelement integrierte Düse 13 führt dem Werkstück 30 so Frischluft hinzu, daß die Werkstücksoberfläche effizient umspült wird. Durch eine Anflanschung 14 in einem anderen Wandelement wird die Luft aus der Bearbeitungskammer abgesaugt.

Die beiden Sauger 51 und 52 der Übergabeeinrichtung 50 können mittels eines Antriebs 53 ein- und ausgefahren werden. Der Antrieb 53 ist auf einer Achse 54, die mittels eines Antriebs 55 angetrieben wird, um eine Drehachse d drehbar gelagert. Bedingt durch die Anordnung zwischen Einbringeinrichtung 20 und Transporteinrichtung 60, stehen die Sauger 51 und 52 in einem rechten Winkel zueinander. Bei einer anderen Anordnung zwischen Einbringeinrichtung 20 und Transporteinrichtung 60 kann selbstverständlich auch ein beliebiger anderer Winkel verwendet werden.

Um zu gewährleisten, daß die Position des Werkstücks 30 relativ zum Bearbeitungswerkzeug 12 immer gleich ist, kann die Einbringeinrichtung 20 mechanisch mit dem Bearbeitungswerkzeug 12 verbunden werden. Um störende Einflüsse bei der Bearbeitung des Werkstücks 30, wie z.B.

Vibrationen, zu vermeiden, können die Einbringeinrichtung 20 und die Übergabeeinrichtung 50 mechanisch entkoppelt werden.

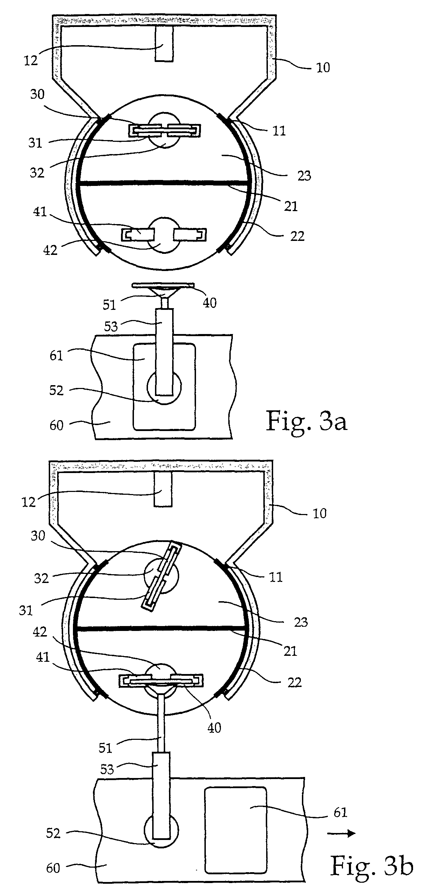

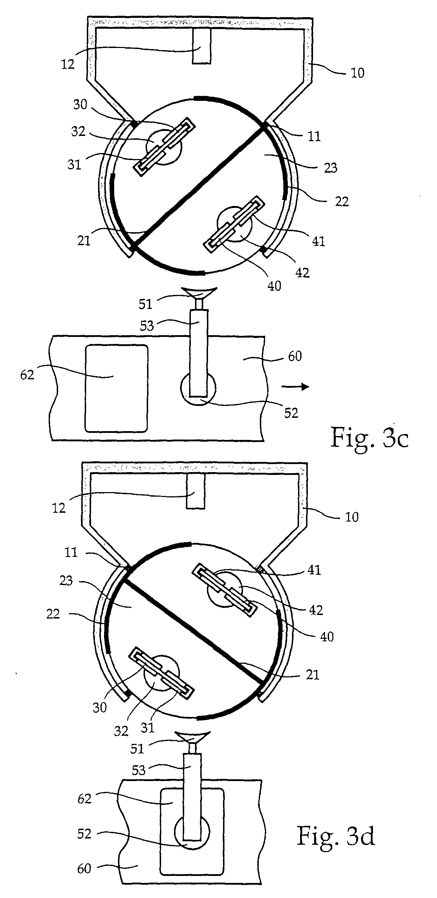

Die Fig. 3 zeigt eine Prinzipskizze der Funktionsweise der bevorzugten Ausführungsform. In Fig. 3a befindet sich das Werkstück 30 im Werkstückhalter 31 innerhalb der Bearbeitungskammer 10 und wird vom Bearbeitungswerkzeug 12 bearbeitet. Der Werkstückhalter 41 befindet sich in geöffnetem Zustand außerhalb der Bearbeitungskammer 10. Das Werkstück 40 wird von der Übergabeeinrichtung 50 in den Werkstückhalter 41 übergeben, während das vorher bearbeitete Werkstück 61 auf der Transporteinrichtung 60 abgelegt wird.

In Fig. 3b wird der Werkstückhalter 31 gedreht, so daß die andere Seite des Werkstücks 30 bearbeitet werden kann. Parallel zur Bearbeitung des Werkstücks 30 transportiert der Sauger 51 das Werkstück 40 in eine Position, in der das Werkstück 40 vom Werkstückhalter 41 ergriffen werden kann. Durch Schließen des Werkstückhalters 41 hält dieser das Werkstück 40 sicher. Der Sauger 51 kann vom Werkstück gelöst werden und in seine Ausgangsposition zurückfahren. Während dessen transportiert die Transporteinrichtung 60 das vorher bearbeitete Werkstück 61 beispielsweise zu einer nicht dargestellten weiterverarbeitenden Einrichtung.

Die Fig. 3c und 3d zeigen, wie die Position der Werkstücke 30 und 40 durch Drehung der Einbringeinrichtung 20 vertauscht werden. Während dessen transportiert die Transporteinrichtung 60 das nächste zu bearbeitende Werkstück 62 in eine Position, in der es vom Sauger 52 ergriffen werden kann. Nach Abschluß der Drehung wird das bearbeitete Werkstück 30 vom Sauger 51 und das nächste zu bearbeitende Werkstück 62 vom Sauger 52 ergriffen und und der Werkstückhalter 31 geöffnet. Durch eine Drehung der Übergabeeinrichtung 50 um die Drehachse d werden die Positionen der Werkstücke 30 und 62 vertauscht. Nun kann das nächste zu bearbeitende Werkstück 62 analog zur Fig. 3a in den Werkstückhalter 31 übergeben und das bearbeitete Werkstück 30 auf der Transporteinrichtung 60 abgelegt werden.

Wie die Fig. 3c und 3d zeigen, ist durch die Anordnung der Wandelemente 21 und 22 gewährleistet, daß die Einbringeinrichtung mit der Bearbeitungskammer über die Dichtungen 11 während der gesamten Drehung stets einen geschlossenen Raum bildet. Vorteilhaft bei dieser Ausführungsform ist es, daß zu keinem Zeitpunkt Laserlicht aus der Bearbeitungskammer 10 austreten kann.

Um das Trägheitsmoment der Einbringvorrichtung weiter zu senken, können beispielsweise die beiden seitlichen Wandelemente 22 der Einbringeinrichtung 20 weggelassen werden. In dieser Ausführungsform ist es zumindest noch bei der Bearbeitung des Werkstücks gewährleistet, daß weder Laserlicht noch Gase bzw. Stäube aus der Bearbeitungskammer 10 austreten. Bei der Drehung der Einbringeinrichtung 20 ist es nun jedoch möglich, daß Laserlicht aus der Bearbeitungskammer 10 austritt. Um einen solchen Austritt zu verhindern, müssen entsprechende Sicherheitseinrichtungen vorgesehen werden, die gewährleisten, daß der Laser bei der Drehung der Einbringeinrichtung 20 ausgeschaltet ist.

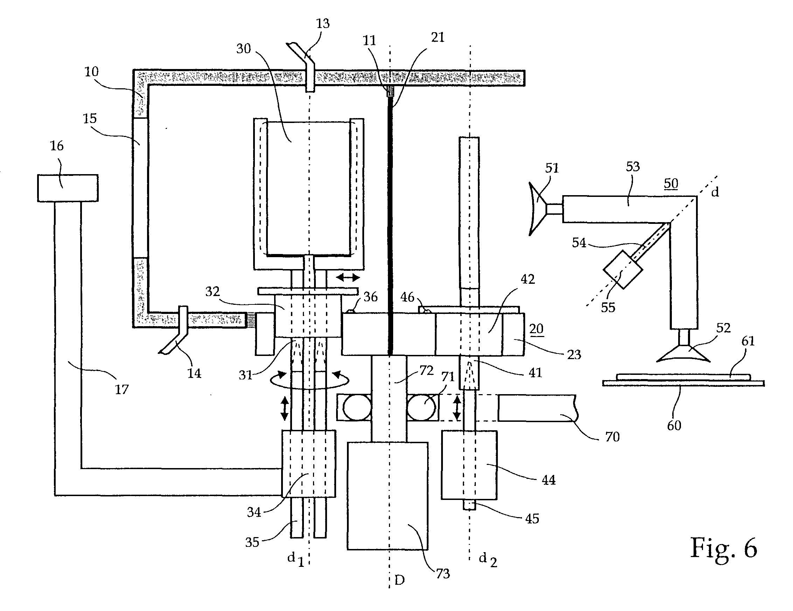

Die Fig. 6 zeigt eine Prinzipskizze der bevorzugten Ausführungsform mit einem Werkstückhalter 31, der bei der Bearbeitung des Werkstücks 30 von der Einbringeinrichtung 20 mechanisch entkoppelt ist. Zur Entkopplung wird zunächst der Antrieb 34 bzw. 44 nicht permanent mit dem Werkstückhalter 31 bzw. 41 verbunden. Die Verbindung zwischen dem Antrieb 34 bzw. 44 und dem Werkstückhalter 31 bzw. 41 wird über ein Gestänge 35 bzw. 45 hergestellt, das mittels des Antriebes 34 bzw. 44 in den Werkstückhalter 31 bzw. 41 hinein- oder herausgefahren werden kann. Der Kontakt wird hier beispielsweise mittels eines Zapfens am Gestänge 35 bzw. 45 hergestellt, der in eine entsprechende Nut des Werkstückshalters 31 bzw. 41 eingebracht wird.

In der hier dargestellten Ausführungsform ist der Werkstückhalter 41 mittels einer Nut 46 gegenüber dem Bodenelement 23 fixiert. Das in den Werkstückhalter 41 eingefahrene Gestänge 45 ist in der Lage, den Werkstückhalter 31 zur Übergabe eines Werkstücks zu öffnen bzw. zu schließen.

Die Einbringeinrichtung 20 ist hier mit der Übergabeeinrichtung 50 mechanisch verbunden, so daß die Position zwischen Übergabeeinrichtung 50 und Werkstückhalter 41 bei der Übergabe eines Werkstücks konstant gehalten wird. Hierdurch wird eine sichere Übergabe eines Werkstücks in den Werkstückhalter gewährleistet.

Zur Bearbeitung des Werkstücks 30 im Werkstückhalter 31 ist hier als Bearbeitungswerkzeug ein Laser 16 mit einem entsprechenden Spiegelsystem schematisch dargestellt, wobei der Laserstrahl durch ein Fenster 15 in der Bearbeitungskammer 10 auf das Werkstück 30 gelenkt wird. Der Laser 16 ist über eine Verbindung 17 mechanisch an den Antrieb 34 gekoppelt. Zur Bearbeitung des Werkstücks 30 wird das Gestänge 35 in den Werkstückhalter 31 hineingefahren und der Werkstückhalter 31 einschließlich der Durchführung 32 aus dem Bodenelement 23 gehoben. Hierdurch wird der Werkstückhalter 31 von der Einbringeinrichtung 20 mechanisch entkoppelt, so daß keine störenden Einflüsse, wie z.B. Vibrationen, auf den Werkstückhalter 31 übertragen werden können.

Durch das Herausheben des Werkstückhalters 31 zusammen mit der Durchführung 32 wird die Fixierung des Werkstückhalters 31 durch die Nut 36 aufgehoben und der Werkstückhalter 31 kann um die Achse d₁ gedreht werden. Durch eine hier nicht dargestellte Federung zwischen dem Werkstückhalter 31 und der Durchführung 32 wird erreicht, daß der Werkstückhalter 31 auch innerhalb der Ebene des Bodenelements 23 bewegt werden kann. Beim Einfahren des Gestänges 35 in den Werkstückhalter 31 kann somit eine Ungenauigkeit zwischen dem Werkstückhalter 31 und dem Laser 16 innerhalb der Ebene des Bodenelements 23 ausgeglichen werden.

Neben der störungsfreien Bearbeitung durch die mechanische Entkopplung des Werkstückhalters 31 von der Einbringeinrichtung 20 ist hier zusätzlich gewährleistet, daß bei der Bearbeitung das Werkstück 30 relativ zum Laser 16 immer exakt gleich positioniert ist, so daß eine hohe Bearbeitungsqualität gewährleistet werden kann.

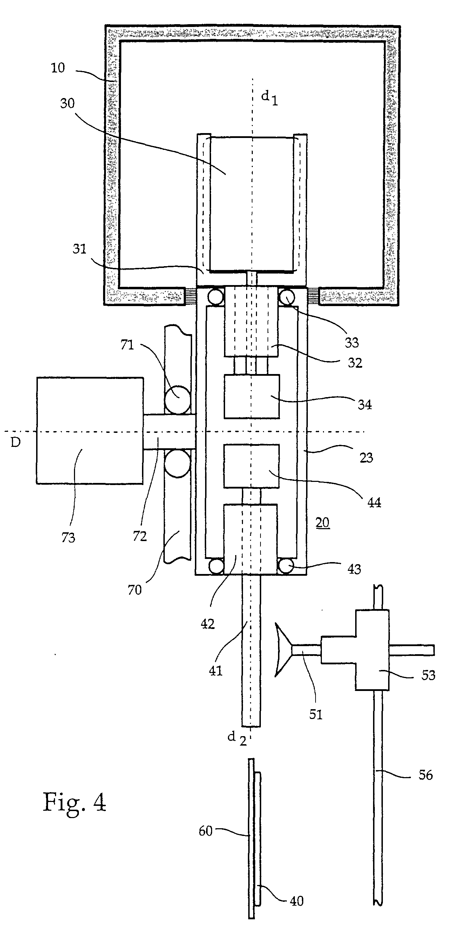

Die Fig. 4 zeigt eine Seitenansicht einer zweiten Ausführungsform, bei der die Drehachsen d1 bzw. d2 der Werkstückhalter 31 bzw. 41 senkrecht zur Drehachse D der Einbringeinrichtung 20 stehen.

Die Übergabeeinrichtung 50 weist neben einem Sauger 51, der mittels eines Antriebs 53 angetrieben wird, eine Führung 56 auf, an der der Antrieb 53 zur Übergabe eines Werkstücks 40 linear verschoben werden kann.

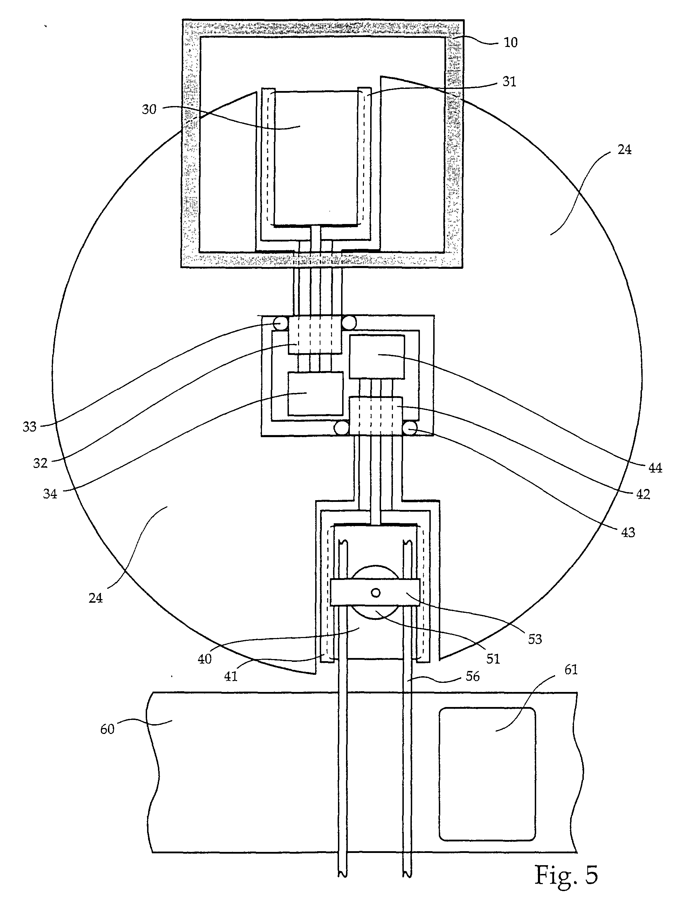

Die Fig. 5 zeigt eine Aufsicht auf eine dritte Ausführungsform, bei der die Werkstückhalter 31 und 41 in einen Drehteller 24 eingearbeitet sind. Die Drehachsen d1 und d2 der Werkstückhalter 31 und 41 liegen auch hier in einer Ebene, die senkrecht zur Drehachse D der Einbringeinrichtung 20 steht. Da die Antriebe 34 bzw. 44 den größten Gewichtsanteil darstellen, kann das Trägheitsmoment des Drehtellers 24 durch ein Nebeneinanderlegen der Antriebe 34 bzw. 44 gesenkt werden. Durch eine entsprechende Abdichtung zwischen dem Drehteller 24 und der Bearbeitungskammer 10 ist auch hier gewährleistet, daß weder bei der Bearbeitung eines Werkstücks noch bei der Drehung des Drehtellers 24 Laserlicht oder Gase bzw. Stäube aus der Bearbeitungskammer 10 austreten.

Ein Vorteil der Ausführungsformen ist es, daß die Übergabe eines Werkstücks 40 in den Werkstückhalter 41 außerhalb der Bearbeitungskammer 10 durchgeführt wird, so daß die Übergabe sehr sicher gestaltet werden kann. Zusätzlich wird parallel ein anderes Werkstück 30 innerhalb der Bearbeitungskammer 10 bearbeitet.

Die Zeiträume, die zur Übergabe eines Werkstücks 40 in den oder aus dem Werkstückhalter 41 benötigt werden, hängen von der Dimensionierung der umgebenden Einrichtungen ab. Die Bearbeitungszeit eines Werkstücks 30 ergibt sich aus der Art und Menge der Daten, die in das Werkstück 30 eingebrannt werden sollen. Von dieser Datenmenge hängt auch der Zeitpunkt Drehung des Werkstücks 30 ab. Die Koordination der einzelnen Vorgänge wird durch diese Zeiten bestimmt. Die Koordination der einzelnen Vorgänge kann von einem Fachmann in Kenntnis der entsprechenden Zeiten leicht ausgeführt werden.

## Patentansprüche

1. Vorrichtung zum Bearbeiten von flachen Werkstücken, wie z.B. Karten oder Buchdokumente, mit
- einem Bearbeitungswerkzeug (12),
- einer Bearbeitungskammer (10), in der ein Werkstück (30) mit dem Bearbeitungswerkzeug (12) bearbeitet wird,
- einer Einbringeinrichtung (20), die als Teil der Wandung der Bearbeitungskammer (10) vorgesehen ist und so angeordnet ist, daß zumindest während der Bearbeitung des Werkstücks (30) in der Bearbeitungskammer (10) ein geschlossener Raum gebildet wird, der einerseits einen direkten oder indirekten Austritt von Laserlicht und andererseits einen Austritt entstehender Gase oder Stäube aus der Bearbeitungskammer (10) verhindern soll,
- mindestens einem Werkstückhalter (31), der auf der Einbringeinrichtung (20) angeordnet ist und das zu bearbeitende Werkstück hält,
**dadurch gekennzeichnet, daß** der Werkstückhalter (31) mittels eines Antriebs (34) um eine Drehachse (d₁) in der Werkstückebene drehbar ist und von der Einbringeinrichtung (20) in die Bearbeitungskammer (10) hinein- bzw. herausbewegt wird.

2. Vorrichtung nach Anspruch 1, **dadurch gekennzeichnet, daß** zusätzlich mindestens ein weiterer Werkstückhalter (41) auf der Einbringvorrichtung (20) vorgesehen ist, der mittels eines Antriebs (44) um eine Drehachse (d₂) in der Werkstückebene drehbar ist.

3. Vorrichtung nach Anspruch 2, **dadurch gekennzeichnet, daß** die Einbringeinrichtung (20) mindestens ein Wandelement (21) aufweist, das so angeordnet ist, daß sich bei der Bearbeitung eines Werkstücks (30) mindestens ein Werkstückhalter (31) mit dem zu bearbeitenden Werkstück (30) innerhalb der Bearbeitungskammer (10) und mindestens ein Werkstückhalter (41) außerhalb der Bearbeitungskammer (10) befindet.

4. Vorrichtung nach Anspruch 3, **dadurch gekennzeichnet, daß** die Einbringeinrichtung (20) weitere Wandelemente (22) aufweist, die so angeordnet sind, daß in der Bearbeitungskammer (10) auch während der Drehung der Einbringeinrichtung (20) stets ein geschlossener Raum gebildet wird.

5. Vorrichtung nach Anspruch 1, **dadurch gekennzeichnet, daß** ein Antrieb (27) vorgesehen ist, der die Einbringeinrichtung (20) um eine Drehachse (D) dreht.

6. Vorrichtung nach Anspruch 5, **dadurch gekennzeichnet, daß** mindestens eine Drehachse (d₁, d₂) eines Werkstückhalters (31, 41) parallel zur Drehachse (D) der Einbringeinrichtung (20) dreht.

7. Vorrichtung nach Anspruch 6, **dadurch gekennzeichnet, daß** die Drehachsen (d₁, d₂) der Werkstückhalter (31, 41) auf einem konzentischen Kreis um die Drehachse (D) der Einbringeinrichtung (20) angeordnet sind.

8. Vorrichtung nach Anspruch 5, **dadurch gekennzeichnet, daß** der Antrieb (27) der Einbringeinrichtung (20) außerhalb der Bearbeitungskammer (10) angeordnet ist.

9. Vorrichtung nach Anspruch 8, **dadurch gekennzeichnet, daß** der Antrieb (27) der Einbringeinrichtung (20) einen Elektromotor aufweist.

10. Vorrichtung nach Anspruch 8, **dadurch gekennzeichnet, daß** der Antrieb (27) der Einbringeinrichtung (10) pneumatische Mittel aufweist.

11. Vorrichtung nach Anspruch 1, **dadurch gekennzeichnet, daß** mindestens ein Werkstückhalter (31, 41) einen Greifer zum Erfassen eines Werkstücks (30, 40) und einen Antrieb (34, 44) zum Öffnen bzw. Schließen des Greifers aufweist.

12. Vorrichtung nach einem der Ansprüche 1 bis 11, **dadurch gekennzeichnet, daß** die Antriebe (34, 44) der Werkstückhalter (31, 41) außerhalb der Bearbeitungskammer (10) angeordnet sind.

13. Vorrichtung nach Anspruch 1, **dadurch gekennzeichnet, daß** das Bearbeitungswerkzeug (12) einen Laser aufweist.

14. Vorrichtung nach Anspruch 1, **dadurch gekennzeichnet, daß** eine Übergabeeinrichtung (50) vorgesehen ist, die ein zu bearbeitendes Werkstück (30) in einen Werkstückhalter (31) übergibt oder ein bearbeitetes Werkstück (40) aus einem Werkstückhalter (41) entnimmt.

15. Vorrichtung nach Anspruch 14, **dadurch gekennzeichnet, daß** die Übergabeeinrichtung (50) mindestens einen Sauger (51) aufweist.

16. Vorrichtung nach Anspruch 15, **dadurch gekennzeichnet, daß** die Übergabeeinrichtung mindestens zwei Sauger (51, 52) aufweist, die auf einer Achse (54) drehbar gelagert sind.

17. Vorrichtung nach Anspruch 1, **dadurch gekennzeichnet, daß** in einem Wandelement der Bearbeitungkammer (10) mindestens eine Düse (13) integriert ist, durch die dem Werkstück (30) Frischluft zugeführt wird, und das Werkstück (30) effizient von Frischluft umspült wird.

18. Vorrichtung nach Anspruch 17, **dadurch gekennzeichnet, daß** in einem Wandelement der Bearbeitungskammer (10) mindestens eine Anflanschung (14) vorgesehen ist, durch die Luft aus der Bearbeitungskammer (10) abgesaugt wird.

19. Vorrichtung nach Anspruch 1, **dadurch gekennzeichnet, daß** mindestens der Werkstückhalter (31), der das zu bearbeitende Werkstück hält, bei der Bearbeitung von der Einbringeinrichtung (20) mechanisch entkoppelt ist.

## Claims

1. An apparatus for processing flat workpieces, for example cards or book documents, having
- a processing tool (12),
- a processing chamber (10) in which a workpiece (30) is processed with the processing tool (12),
- an introducing device (20) which is provided as part of the wall of the processing chamber (10) and disposed so as to form at least during processing of the workpiece (30) a closed space in the processing chamber (10) that is intended to prevent direct or indirect emergence of laser light from the processing chamber, on the one hand, and the emergence of arising gases or dusts therefrom, on the other hand,
- at least one workpiece holder (31) which is disposed on the introducing device (20) and holds the workpiece to be processed,
**characterized in that** the workpiece holder (31) is rotatable by a drive (34) about a rotation axis (d₁) in the workpiece plane, and is moved in or out of the processing chamber (10) by the introducing device (20).

2. The apparatus of claim 1, **characterized in that** at least one further workpiece holder (41) is additionally provided on the introducing apparatus (20) and rotatable by a drive (44) about a rotation axis (d₂) in the workpiece plane.

3. The apparatus of claim 2, **characterized in that** the introducing device (20) has at least one wall element (21) disposed such that at least one workpiece holder (31) with the workpiece (30) to be processed is located within the processing chamber (10) and at least one workpiece holder (41) outside the processing chamber (10) during processing of a workpiece (30).

4. The apparatus of claim 3, **characterized in that** the introducing device (20) has further wall elements (22) disposed such that a closed space is always formed in the processing chamber (10) even during rotation of the introducing device (20).

5. The apparatus of claim 1, **characterized in that** a drive (27) is provided for rotating the introducing device (20) about a rotation axis (D).

6. The apparatus of claim 5, **characterized in that** at least one rotation axis (d₁, d₂) of a workpiece holder (31, 41) rotates parallel to the rotation axis (D) of the introducing device (20).

7. The apparatus of claim 6, **characterized in that** the rotation axes (d₁, d₂) of the workpiece holders (31, 41) are disposed on a concentric circle about the rotation axis (D) of the introducing device (20).

8. The apparatus of claim 5, **characterized in that** the drive (27) of the introducing device (20) is disposed outside the processing chamber (10).

9. The apparatus of claim 8, **characterized in that** the drive (27) of the introducing device (20) has an electric motor.

10. The apparatus of claim 8, **characterized in that** the drive (27) of the introducing device (10) has pneumatic means.

11. The apparatus of claim 1, **characterized in that** at least one workpiece holder (31, 41) has a gripper for grasping a workpiece (30, 40) and a drive (34, 44) for opening or closing the gripper.

12. The apparatus of any of claims 1 to 11, **characterized in that** the drives (34, 44) of the workpiece holders (31, 41) are disposed outside the processing chamber (10).

13. The apparatus of claim 1, **characterized in that** the processing tool (12) has a laser.

14. The apparatus of claim 1, **characterized in that** a delivery device (50) is provided for delivering a workpiece (30) to be processed into a workpiece holder (31) or removing a processed workpiece (40) from a workpiece holder (41).

15. The apparatus of claim 14, **characterized in that** the delivery device (50) has at least one sucker (51).

16. The apparatus of claim 15, **characterized in that** the delivery device has at least two suckers (51, 52) mounted rotatably on an axle (54).

17. The apparatus of claim 1, **characterized in that** at least one nozzle (13) is integrated in a wall element of the processing chamber (10) for supplying fresh air to the workpiece (30) and the workpiece (30) is washed around efficiently by fresh air.

18. The apparatus of claim 17, **characterized in that** at least one flange (14) is provided in a wall element of the processing chamber (10) for sucking the air out of the processing chamber (10).

19. The apparatus of claim 1, **characterized in that** at least the workpiece holder (31) holding the workpiece to be processed is decoupled mechanically from the introducing device (20) during processing.

## Revendications

1. Dispositif pour l'usinage de pièces à usiner plates, comme par exemplc des cartes ou des documents de type livres, avec :
- un outil d'usinage (12),
- une chambre d'usinage (10), dans laquelle une pièce à usiner (30) est usinée avec l'outil d'usinage (12),
- un dispositif de mise en place (20), qui est prévu comme une partie de la paroi de la chambre d'usinage (10) et qui est disposé de telle sorte que, au moins pendant l'usinage de la pièce à usiner (30) dans la chambre d'usinage (10), un espace fermé soit formé, qui doit empêcher, d'une part, une sortie directe ou indirecte d'une lumière laser et, d'autre part, une sortie hors de la chambre d'usinage (10) de gaz ou de poussière se trouvant dans celle-ci,
- au moins un porte-pièce (31) qui est disposé sur le dispositif de mise en place (20) et qui tient la pièce à usiner,
**caractérisé en ce que** le porte-pièce (31) est rotatif autour d'un axe de rotation (d₁) dans le plan de la pièce à usiner au moyen d'une motorisation (34) et **en ce qu'**il est apporté dans la chambre d'usinage (10), respectivement retiré de celle-ci, par le dispositif de misc en place (20).

2. Dispositif selon la revendication 1, caractérisé en cc qu'il est prévu en plus au moins un autre porte-pièce (41) sur le dispositif de mise en place (20), porte-pièce (41) qui est rotatif autour d'un axe de rotation (d₂) dans le plan de la pièce à usiner au moyen d'une motorisation (44).

3. Dispositif selon la revendication 2, **caractérisé en ce que** le dispositif de mise en place (20) présente au moins un élément de paroi (21) qui est disposé de telle sorte que, lors de l'usinage d'une pièce à usiner (30), au moins un porte-pièce (31) se trouve avec la pièce à usiner (30) à l'intérieur de la chambre d'usinage (10) et au moins un porte-pièce (41) se trouve à l'extérieur de la chambre d'usinage (10).

4. Dispositif selon la revendication 3, **caractérisé en ce que** le dispositif de mise en place (20) présente d'autres éléments de paroi (22) qui sont disposés de telle sorte qu'un espace fermé soit toujours formé dans la chambre d'usinage (10) également pendant la rotation du dispositif de mise en place (20).

5. Dispositif selon la revendication 1, **caractérisé en ce qu'**une motorisation (27) est prévue qui fait tourner le dispositif de mise en place (20) autour d'un axe de rotation (D).

6. Dispositif selon la revendication 5, **caractérisé en ce qu'**au moins un axe de rotation (d₁, d₂) d'un porte-pièce (31, 41) tourne de manière parallèle à l'axe de rotation (D) du dispositif de mise en place (20).

7. Dispositif selon la revendication 6, **caractérisé en ce que** les axes de cotation (d₁, d₂) des porte-pièces (31, 41) sont disposés sur un cercle concentrique autour de l'axe de rotation (D) du dispositif de mise en place (20).

8. Dispositif selon la revendication 5, **caractérisé en ce que** la motorisation (27) du dispositif de mise en place (20) est disposée à l'extérieur de la chambre d'usinage (10).

9. Dispositif selon la revendication 8, **caractérisé en ce que** la motorisation (27) du dispositif de mise en place (20) présente un moteur électrique.

10. Dispositif selon la revendication 8, **caractérisé en ce que** la motorisation (27) du dispositif de mise en place (10) présente des moyens pneumatiques.

11. Dispositif selon la revendication 1, **caractérisé en ce qu'**au moins un porte-pièce (31, 41) présente une griffe pour saisir une pièce à usiner (30, 40) ainsi qu'une motorisation (34, 44) pour ouvrir, respectivement fermer, la griffe.

12. Dispositif selon l'une quelconque des revendications 1 à 11, **caractérisé en ce que** les motorisations (34, 44) des porte-pièces (31, 41) sont disposées à l'extérieur de la chambre d'usinage (10).

13. Dispositif selon la revendication 1, **caractérisé en ce que** l'outil d'usinage (12) présente un laser.

14. Dispositif selon la revendication 1, **caractérisé en ce qu'**il est prévu un dispositif de transfert (50) qui livre une pièce à usiner (30) dans un porte-pièce (31) ou qui retire une pièce usinée (40) hors d'un porte-pièce (41).

15. Dispositif selon la revendication 14, **caractérisé en ce que** le dispositif de transfert (50) présente au moins un aspirateur (51).

16. Dispositif selon la revendication 15, **caractérisé en ce que** le dispositif de transfert présente au moins deux aspirateurs (51, 52) qui sont montés rotatifs sur un axe (54).

17. Dispositif selon la revendication 1, **caractérisé en ce qu'**au moins une buse (13) est intégrée dans un élément de paroi de la chambre d'usinage (10), buse (13) à travers laquelle de l'air frais est dirigé vers la pièce à usiner (30) de sorte à balayer de manière efficace la pièce à usiner (30) avec l'air frais.

18. Dispositif selon la revendication 17, **caractérisé en ce qu'**au moins une flasque (14) est prévue dans un élément de paroi de la chambre d'usinage (10), flasque (14) à travers laquelle l'air est aspiré hors de la chambre d'usinage (10).

19. Dispositif selon la revendication 1, **caractérisé en ce qu'**au moins le porte-pièce (31), qui tient la pièce à usiner, est mécaniquement découplé du dispositif de mise en place (20) lors de l'usinage.
